Europäisches Patentamt

European Patent Office

Office européen des brevets

(11) Veröffentlichungsnummer: **0 077 524**
**B1**

(12) # EUROPÄISCHE PATENTSCHRIFT

(45) Veröffentlichungstag der Patentschrift:
15.01.86

(21) Anmeldenummer: **82109459.6**

(22) Anmeldetag: **13.10.82**

(51) Int. Cl.⁴: **B 01 J 23/68,** B 01 D 53/36

(54) **Verfahren zur Herabsetzung der Zündtemperatur von Dieselruss.**

(30) Priorität: **21.10.81 DE 3141713**

(43) Veröffentlichungstag der Anmeldung:
**27.04.83 Patentblatt 83/17**

(45) Bekanntmachung des Hinweises auf die Patenterteilung:
**15.01.86 Patentblatt 86/3**

(84) Benannte Vertragsstaaten:
**AT BE DE FR GB IT NL SE**

(56) Entgegenhaltungen:
**DE-A-2 951 316**
**FR-A-2 242 142**
**FR-A-2 430 916**
**GB-A-2 062 487**
**US-A-3 249 558**

(73) Patentinhaber: **Degussa Aktiengesellschaft,
Weissfrauenstrasse 9, D-6000 Frankfurt am Main
1 (DE)**

(72) Erfinder: **Domesle, Rainer, Dr., Wingertstrasse 202,
D-6457 Maintal (DE)**
Erfinder: **Koberstein, Edgar, Dr., Wolfskernstrasse
8, D-8755 Alzenau (DE)**
Erfinder: **Pletka, Hans- Dieter, Dr., Im
Schwalbengrund 20, D-6463 Freigericht I (DE)**
Erfinder: **Völker, Herbert, Bogenstrasse 43, D-6450
Hanau 11 (DE)**

## Beschreibung

Die Erfindung betrifft ein Verfahren zur Herabsetzung der Zündtemperatur von aus dem Abgas von Dieselmotoren ausgefiltertem Dieselruß.

Dieselmotoren emittieren neben den auch von Ottomotoren ausgestoßenen Schadstoffen, wie Kohlenwasserstoffen, Stickoxiden und CO, bedingt durch ihre Betriebsweise, auch Rußteilchen bzw. feinste Kondensattröpfchen oder ein Konglomerat von beiden ("particulates"). Diese "particulates", im folgenden ebenfalls als Dieselruß bezeichnet, sind besonders reich an kondensierten, polynuklearen Kohlenwasserstoffen, von denen einige als krebserregend erkannt worden sind.

Es ist schon vorgeschlagen worden, Ruß und Kondensatteilchen in Fallen oder Filtern einzufangen. Da aber die Temperaturen von Dieselabgasen unter normalen Betriebsbedingungen zum Abbrennen des angesammelten Rußes nicht ausreichen — dazu sind je nach motorbedingter Rußzusammensetzung mindestens 450—600° C nötig — muß für eine rechtzeitige Erhöhung der Abgastemperatur zur Regenerierung der Falle bzw. des Filters gesorgt werden, um ein Akkumulieren von Ruß und damit Verstopfungen zu vermeiden. Dies kann u. a. so geschehen, daß das im Motor gebildete Luft/Kraftstoff-Gemisch periodisch angefettet wird und damit höhere Abgastemperaturen erzeugt werden. Eine andere Möglichkeit sieht die Anordnung eines Brenners im Abgassystem vor dem Filter vor, welcher bei Bedarf gezündet wird und für die für den Rußabbrand benötigte Temperatur sorgt.

Diese Lösungswege sind aber mit zusätzlichem Kraftstoffverbrauch verbunden und reduzieren damit teilweise einen wichtigen Vorteil des Dieselmotors.

Es wurde nun gefunden, daß sich die Zündtemperatur von Dieselruß durch eine Ausrüstung des Rußfilters bzw. der Rußfalle mit einem speziellen Katalysator oder mit einer diesen enthaltenden, temperaturbeständigen Substanz, gerabsetzen und sich dadurch insbesondere eine wesentliche Verminderung des Kraftstoffverbrauchs während der Regenerierungsphase eines Filters erreichen läßt.

Gegenstand der Erfindung ist ein Verfahren zur Herabsetzung der Zündtemperatur von aus dem Abgas von Dieselmotoren ausgefiltertem Dieselruß, welches dadurch gekennzeichnet ist, daß das Abgas über einen Silbervanadat als aktive Substanz enthaltenden Katalysator geleitet wird, welcher auf einem als struktureller Verstärker dienenden Filterelement aufgebracht ist. Im Rahmen der Erfindung sind alle Silbervanadate verwendbar.

Als struktureller Verstärker für den Katalysator bzw. ein diesen enthaltendes Stoffsystem kommen an sich bekannte Filtersysteme für Dieselabgase in Frage, bei denen Zufluß- und Abströmkanal für das Abgas so angeordnet sind, daß bei möglichst großer Filtrierleistung ein Minimum an Druckverlust hingenommen werden muß.

Gemäß einer besonders günstigen Ausführungsform der Erfindung ist der strukturelle Verstärker ein von zahlreichen Strömungskanälen durchzogener monolithischer Keramikkörper, dessen Kanalmündungen in gegenüberliegenden Stirnflächen so mit Verschlußmitteln versehen sind, daß jeweils ein in einer Stirnfläche offener Kanal in der gegenüberliegenden Stirnfläche verschlossen ist. Ein solches Filterelement hat also die Form eines üblichen monolithischen strukturellen Verstärkers für Katalysatoren und kann aus α-Aluminiumoxid oder Cordierit bestehen. Die Strömungskanäle weisen makroporöse Wandungen auf, welche als Filterflächen herangezogen werden. Um dies zu erreichen, wird jeweils ein an einer Stirnfläche offener Kanal auf der gegenüberliegenden Stirnfläche verschlossen. Der Verschluß erfolgt mit einem Keramikstopfen, welcher entweder mit dem Material des Monolithen versintert oder mittels eines feuerfesten Kittes verklebt ist. Das Abgas wird also durch Schikanen gezwungen, die makroporös ausgebildeten Kanalwände zu durchströmen, wobei der Dieselruß zurückgehalten wird.

Als struktureller Verstärker kann aber auch eine Packung aus temperaturbeständiger Metall- oder Mineralwolle verwendet werden.

Infrage kommt dafür auch eine Wicklung aus Stahlsiebgewebe, welche Bestandteil eines katalytischen Abgaskonverters für Brennkraftmaschinen ist und folgenden Aufbau hat:

— ein zylindrisches Gehäuse, welches an beiden Enden einen konischen Deckel trägt,

— ein am gaseintrittsseitigen Deckel befestigtes Gaszufuhrrohr, welches entweder an der verjüngten Deckelseite endigt oder bis zur Ebene des Übergangs zwischen zylindrischem Gehäuse und gasaustrittsseitigem Deckel führt und jeweils in dem innerhalb des Gehäusezylinders liegenden Abschnitt perforiert ist,

— Ein am gasaustrittsseitigen Deckel befestigtes Gasaustrittsrohr, welches entweder mit einem innerhalb des Gehäusezylinders perforierten Abschnitt bis zur Ebene des Übergangs zwischen zylindrischem Gehäuse und gaseintrittsseitigen Deckel führt oder schon an der verjüngten Seite des gasaustrittsseitigen Dekels endigt,

— eine auf dem perforierten Abschnitt des Gasaustrittsrohrs oder des Gaszufuhrrohrs anliegende Wicklung aus mit Katalysator beschichteten, abwechselnd glatten und gewellten Lagen aus hochtemperaturfestem und zunderbeständigen Stahlsiebgewebe, welche einen auf ihrem Umfang angeordneten perforierten Zylinder oder eine Isolierschicht trägt

— sowie durch an den Übergängen zwischen dem zylindrischen Gehäuse und den konischen Deckeln befestigte, an den oberen und unteren Stirnflächen er Stahlsiebgewebewicklung angreifende Abstützmittel (DE-OS 29 44 841)

Weiterhin kann als struktureller Verstärker auch eine Siebgewebeanordnung aus temperatur- und korrosionsbeständigem Metall verwendet werden, welche aus abwechseln mindestens einer Lage eines gewellten oder gefalteten Siebgewebes oder Bleches und mindestens einer ebenen geschlossenen oder durchbrochenen Decklage besteht, wobei die Lagen zu einem gasdurchlässigen Paket geschichtet oder spiralig zu einem zylindrischen, ovalen, rechteckigen oder mehreckigen gasdurchlässigen Körper aufgewickelt sind und welche dadurch gekennzeichnet ist, daß das Paket bzw. der Wickelkörper an den gegenüberliegenden Stirnflächen so durch Abdeckmittel verschlossen ist, daß ein verschlossener Stirnflächenabschnitt einem offenen Stirnflächenabschnitt gegenüberliegt (DE-OS 29 51 316).

Nach einer vorteilhaften Ausbildung der Erfindung ist das Silbervanadat seinerseits auf einer temperaturbeständigen Trägersubstanz abgeschieden oder mit ihr vermischt. Als Trägermaterialien kommen übliche Stoffe, insbesondere Aluminiumoxide der Übergangsreihe in Frage; andere Beispiele sind Siliciumdioxid, Titandioxid, Zirkonoxid und Oxide der Seltenen Erdmetalle.

In der FR-A-2 242 142 war zwar bereits die Verwendung von gegebenenfalls mit einem temperaturbeständigen Trägermaterial vermischtem oder mit Quarzwolle kombinierten Silbervanadat als Katalysator für die Oxidation gasförmiger Verbrennungsprodukte aus Automobil-Brennkraftmaschinen beschrieben, aber nur in bezug auf die Umwandlung von CO in $CO_2$, nicht aber zwecks Herabsetzung der Zündtemperatur von aus dem Abgas von Dieselmotoren ausgefiltertem Deiselruß.

Aus der US-A-3 249 558 war ferner ein Verfahren für die Bereitung von Oxidationskatalysatoren für die Reinigung des Abgases von Brennkraftmaschinen bekannt, wobei ein aktivierter $Al_2O_3$ —Träger nacheinander mit Säure und Natronlauge sowie $V_2O_5$ imprägniert wird und nach Auswaschen der Natriumsalze mit einem Salz eines Oxidationskatalysator, z. B. aus Silber nachimprägniert und dann calciniert wird.

Der hierbei nicht als stöchiometrisches Silbermonovanadat vorgebildete, sondern in situ mit wechselnden Zusammensetzungen auf dem Träger gebildete silberhaltige Vanadinoxidkatalysator wird lediglich zur Konversion von CO und flüchtigen Kohlenwasserstoffen als Bestandteile von Autoabgas vorgeschlagen. Da ihm erhöhte Bleifestigkeit zugeschrieben wird, ist seine Anwendung nur auf das Abgas von Bleibenzinbetriebenen Ottomotoren abgestellt.

Die DE-OS 29 51 316 und die DE-OS 29 44 841 offenbaren spezielle, auch im vorliegenden Verfahren einsetzbare Filterelemente für die Dieselabgasreinigung, wobei die Verwendbarkeit von Edelmetall und/oder Unedelmetall, gegebenenfalls auf einem katalysefördernden Metalloxid, zwar erwähnt ist aber Silbervanadat oder auch nur Silber und Vanadin ebensowenig angesprochen werden wie die Zündtemperatursenkung von ausgefiltertem Dieselruß.

Das erfindungsgemäße Verfahren ist demgegenüber auf die Förderung des Abbrands von ausgefiltertem Dieselruß, also von Partikeln (particulates) mit Hilfe von (z.B. im Dieselmotorabgas enthaltenen) Luftsauerstoff gerichtet und keine der besprochenen Literaturstellen offenbart heterogene Katalyse der Reaktion zwischen dem feststoffartigen Dieselruß und sauerstoffhaltigem Gas an einem Silbervanadat als aktive Substanz enthaltenden Katalysator.

Die Erfindung wird nachfolgend anhand von Ausführungsbeispielen in Verbindung mit der Zeichnung näher erläutert. In dieser zeigen

Figuren 1 a und 1 b   die Draufsicht und den Schnitt eines Dieselfilters in Form eines üblichen monolithischen strukturellen Verstärkers für Katalysatoren aus Cordierit mit porösen Wandungen der Strömungskanäle, bei dem auf der Anström- und Abströmseite Kanäle mit einem Keramikstopfen verschlossen sind. Diese Stopfen sind so verteilt, daß jeweils einem verschlossenen Kanalende ein offenes gegenüberliegt;

Figur 2   die Zündtemperatur von Dieselruß und den nach dem Abbrennen des Rußes verbleibenden Druckverlust eines erfindungsgemäß katalytisch aktivierten und eines nicht aktivierten Dieselfilters über mehrere, jeweils nach einer Stunde eingeleitete Abbrennzyklen;

Figur 3   den Abbrennzyklus mit Zündtemperatur und Druckverluständerung über die Betriebszeit eines erfindungsgemäß aktivierten Filters der Bauert nach Figur 1 und

Figur 4   den Abbrennzyklus mit Zündtemperatur und Druckverluständerung über die Betriebszeit eines nicht aktivierten Filters der Bauart nach Figur 1.

Beispiel 1: (Herstellung von Silbermonovanadat) In einem Becherglas werden 234 g (1 Mol) $NaVO_3$ · $4H_2O$ in 1,5 l $H_2O$ in der Hitze gelöst und anschließend 178,5 g (1,05 Mol) $AgNO_3$ in 250 ml $H_2O$ unter Rühren zugegossen. Es fällt sofort tieforangefarbenes Silbermonovanadat aus. Der Niederschlag wird abgenutscht und zwei Mal mit 1 ltr. $H_2O$ gewaschen und anschließend bei 80° C im Trockenschrank getrocknet.

Beispiel 2: (Coaten des Filters)

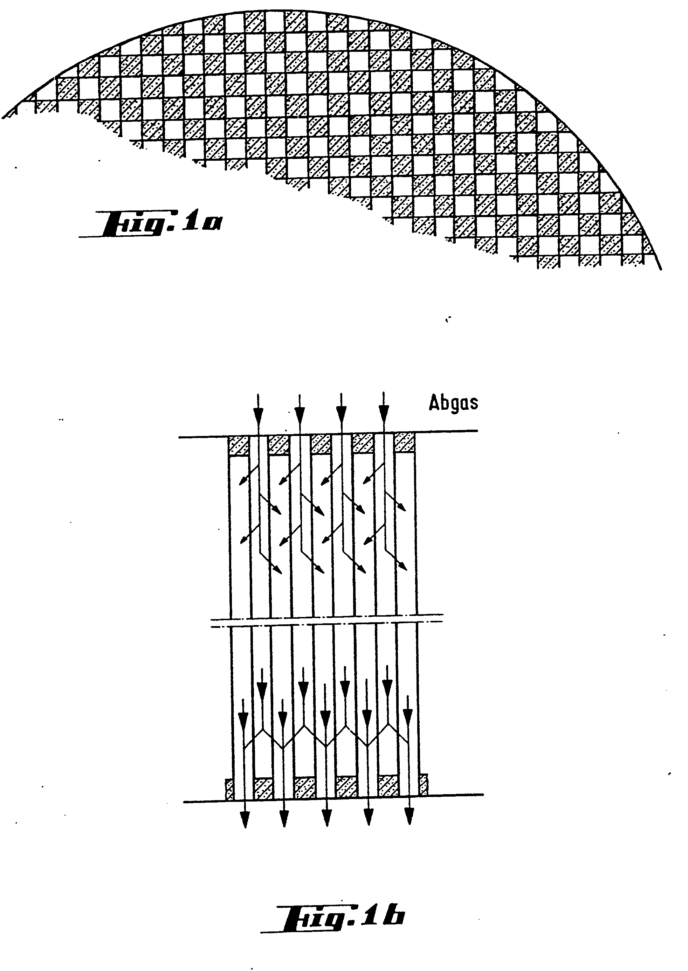

75 g des nach Beispiel 1 erhaltenen Silbervanadats werden in 250 ml $H_2O$ verteilt, 15 h in einer Kugelmühle gemahlen und die erhaltene Suspension anschließend mit $H_2O$ auf 800 ml verdünnt. Ein monolithischer Filterkörper aus Cordierit, wie in Fig. 1 gezeigt, mit 11,85 cm Durchmesser, 15,25 cm Länge und 15,5 Zellen pro Quadratcentimeter wird mit der verdünnten Suspension in Berührung gebracht und dadurch Silbervanadat auf dem Filterkörper abgeschieden. Überschüssige Suspension wird daraufhin ausgeblasen und das mit Katalysator beschichtete Filter 3 h lang bei 300° C getrocknet. Die Aufnahme an Silbervanadat beträgt hierbei ca. 35 g. Gegenüber dem nichtgecoateten Filter hat das mit Katalysator beschichtete Filter nur einen geringfügig erhöhten Staudruck.

| Staudruchmessung unter konstanten Bedingungen | | |
|---|---|---|
| Luftvolumen m³/h | Ohne Beschichtung mm WS | beschichtet: mmWS |
| 150 | 91 | 136 |
| 200 | 135 | 196 |

Beispiel 3: (Anwendungstechnische Prüfung)

Ein gemäß Beispiel 2 hergestelltes aktives Filter wurde im Abgasstrom eines Dieselmotors eingebaut und auf seine Funktion der Rußfilterung und Erniedrigung der Rußzündtemperatur überprüft. Die Testparameter waren folgende:

a) Motor
— 4 Zylinder Einspritzmotor, Diesel
— 1,6 l Hubraum
— 40 kW Leistung

b) Rußbeladungsphase

— Last: 72 N entsprechend ca. 400° C vor Filter
— Drehzahl: 2100 min⁻¹
— Sauerstoffgehalt im Abgas: 10 Vol.%

c) Abbrennphase

— Drehzahl: 3000 min⁻¹
— Last: 75 N entsprechend 500° C vor Filter bis
—      80 N       "       570° C  "     "
— Sauerstoffgehalt im Abgas: 5 Vol.%

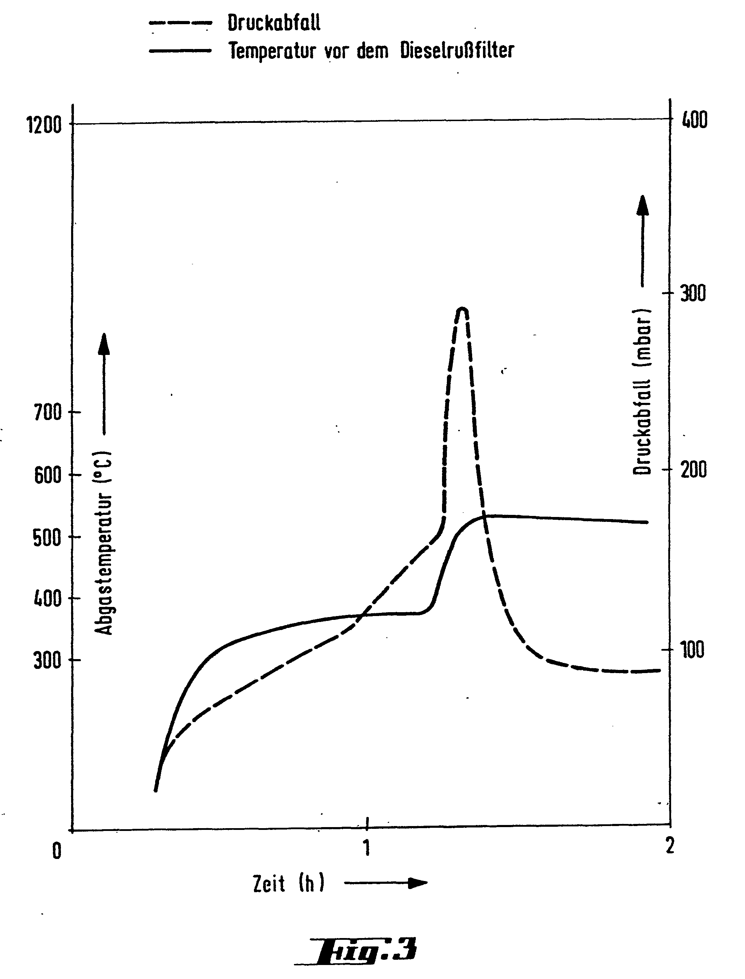

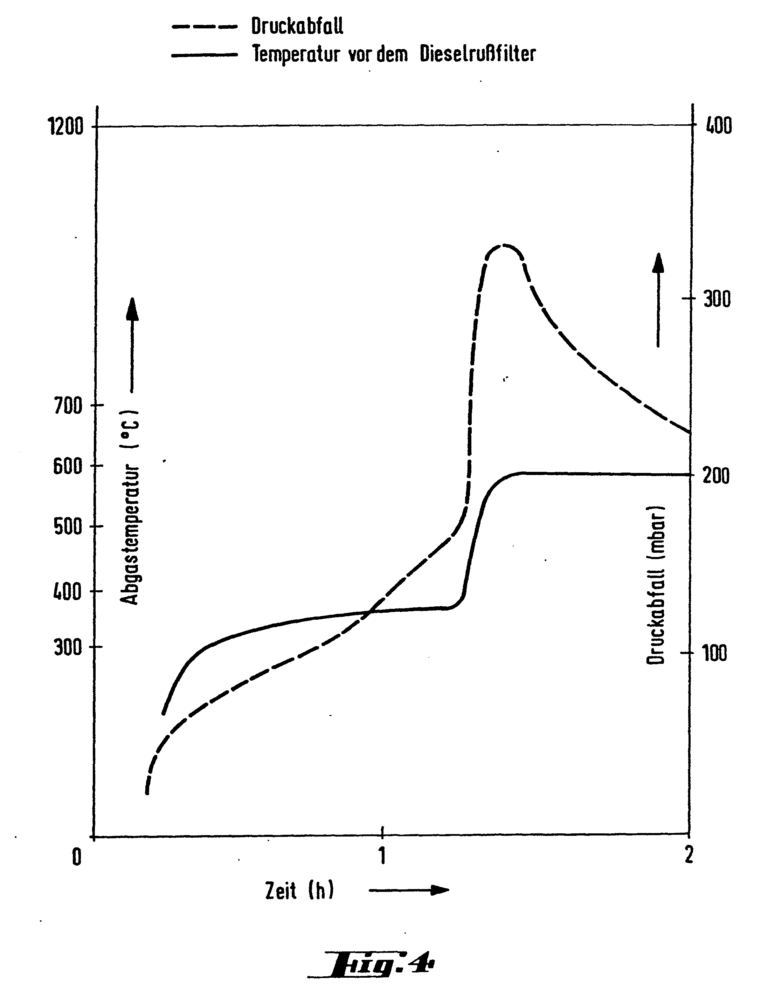

In der Rußbeladungsphase (b) wurde das Filter so lange dem Abgasstrom ausgesetzt, bis eine Druckdifferenz von 150 mbar über das Filter erreicht war. Für die darauffolgende Abbrennphase wurde die Drehzahl auf 3000 min⁻¹ gestellt und die Last ausgehend von 72 N kontinuierlich hochgeregelt. Der Druckverlust stieg durch die erhöhte Drehzahl und Temperatur vorübergehend auf ca. 300 mbar steil an, bis der angesammelte Ruß zündete und der Druckverlust wieder sank. In Fig. 3 ist so ein Zyklus für ein entsprechend der Erfindung aktiviertes Filter dargestellt, wogegen Fig. 4 den gleichen Vorgang für ein nichtaktiviertes Filter zeigt.

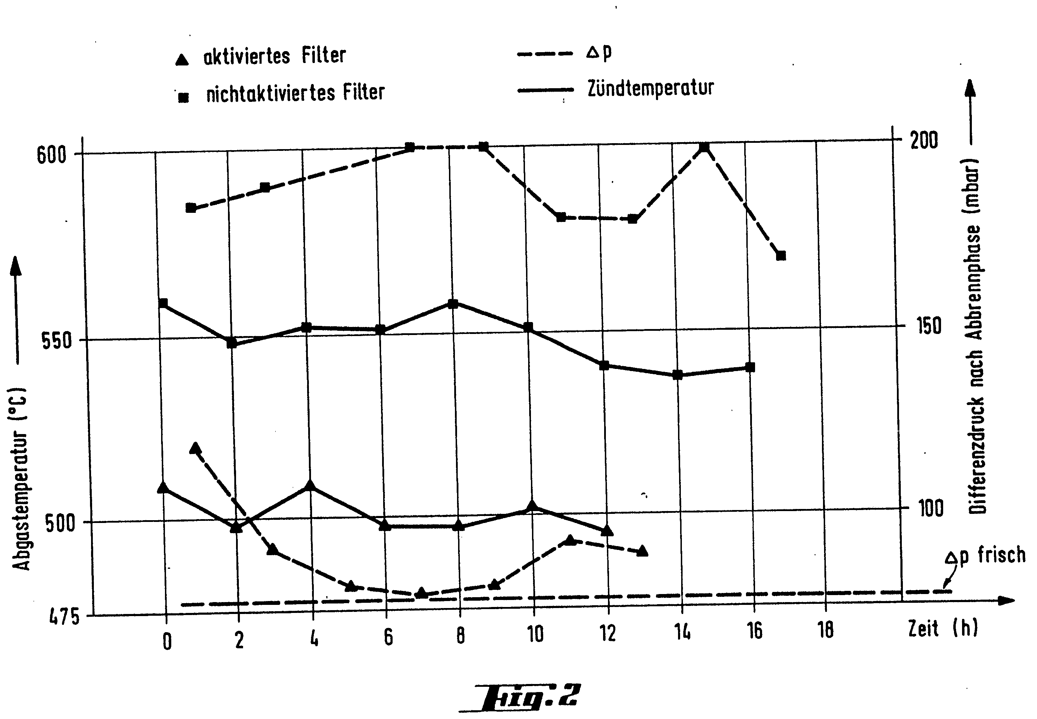

Ein Vergleich der beiden Figuren beweist den Vorteil des erfindungsgemäß beschichteten Filters in bezug auf Rußabbrenntemperatur und verbleibenden Druckverlust nach dem Abbrennvorgang. Während beim nichtaktivierten Filter ein Druckverlust von ca. 200 mbar bei einer Motordrehzahl von 3000 min⁻¹ und einer Last von 80 Newton bestehen blieb, sank er beim erfindungsgemäß aktivierten Filter innerhalb sehr kurzer Zeit (ca. 12 min) auf Werte unter 100 mbar ab. Zur Demonstration der Verläßlichkeit der Einzelmessung sind mehrere Sammel- und Abbrennzyklen mit demselben Filter hintereinander gefahren worden. Die ergebnisse sind in Fig. 2 sowohl für das entsprechend der Erfindung aktivierte Filter als auch für ein nichtaktiviertes Filter eingezeichnet. Die erfindungsgemäße Aktivierung erniedrigt die Zündtemperatur des Dieselrußes um mindestens 50° C und bewirkt gleichzeitig einen vollständigen Abbrand desselben. Das nichtaktivierte Filter hingegen baut bei den angewendeten Abbrandbedingungen seinen Staudruck nur langsam und unvollständig ab. Das bedeutet Leistungsverlust am Motor und damit höheren Kraftstoffverbrauch. Eine Erhöhung der Abbrenntemperatur zum vollständigen Rußabbrand am nichtaktivierten Filter würde ebenfalls zu höherem Kraftstoffverbrauch führen.

**Patentansprüche**

1. Verfahren zur Herabsetzung der Zündtemperatur von aus dem Abgas von Dieselmotoren ausgefiltertem Dieselruß, dadurch gekennzeichnet, daß das Abgas über einen Silbervanadat als aktive Substanz enthaltenden Katalysator geleitet wird, welcher auf einem als struktureller Verstärker dienenden Filterelement aufgebracht ist.

2. Verfahren nach Anspruch 1, dadurch gekennzeichnet, daß der strukturelle Verstärker ein von zahlreichen Strömungskanälen durchzogener monolithischer Keramikkörper ist, dessen Kanalmündungen in gegenüberliegenden Stirnflächen so mit Verschlußmitteln versehen ist, daß jeweils ein in einer Stirnfläche offener Kanal in der gegenüberliegenden Stirnfläche verschlossen ist.

3. Verfahren nach Anspruch 1 oder 2, dadurch gekennzeichnet, daß das silbervanadat seinerseits auf einer temperaturbeständigen Trägersubstanz abgeschieden oder mit ihr vermischt ist.

**Claims:**

1. A process for reducing the ignition temperature of diesel soot filtered from the waste gas of diesel engines, characterised in that the waste gas is conducted via a catalyst containing silver vanadate as active substance, which is applied on a filter element acting as structural reinforcing means.

2. A process according to claim 1, characterised in that the structural reinforcing means is a monolithic ceramic member drawn through by numerous flow channels, the channel orifices of which in opposite faces, are provided with sealing means, such that an open channel in a face is sealed in each case in the opposite face.

3. A process according to claim 1 or 2, characterised in that the silver vanadate is itself deposited on a temperature-resistant carrier material or is mixed therewith.

**Revendications**

1° Procédé pour l'abaissement de la température d'inflammation de noir de fumée de diesel, filtré du gaz d'échappement de moteurs Diesel, caractérisé par le fait que l'on fait passer le gaz d'échappement sur un catalyseur contenant en tant que substance active, du vanadate d'argent qui est appliqué sur un élément filtrant servant de renfort structural.

2° Procédé selon la revendication 1, caractérisé par le fait que le renfort structural est un corps céramique monolithique traversé de nombreux conduits d'évacuation, et est muni de moyens de fermeture d'orifices de ces conduits sur les faces frontales opposées, de sorte que chaque fois qu'un conduit est ouvert sur une face frontale, il est fermé sur la face frontale opposée.

3° Procédé selon les revendications 1 ou 2, caractérisé par le fait que le vanadate d'argent est pour sa part déposé sur une substance porteuse thermostable ou mélangé à celle-ci.

Fig. 1a

Abgas

Fig. 1b

Fig:2

Fig. 3

Fig. 4